Europäisches Patentamt

European Patent Office

Office européen des brevets

(11) Publication number: **0 209 252**
A2

# EUROPEAN PATENT APPLICATION

(21) Application number: 86304620.7

(22) Date of filing: 16.06.86

(51) Int. Cl.⁴: **G 06 K 9/00**

(30) Priority: 15.07.85 US 745966

(71) Applicant: Visionetics Corporation, 57, Commerce Road, Brookfield Center Connecticut 06805 (US)

(72) Inventor: Labinger, Richard L., 22, Sabina Road, Trumbull Connecticut 06611 (US)
Inventor: Tinnerino, Natale F., 51, Wood Road, Redding Connecticut 06966 (US)
Inventor: Bryant, Timothy E., 20632, Via Jardin, Yorba Linda California 92686 (US)

(43) Date of publication of application: 21.01.87
Bulletin 87/4

(74) Representative: Jackson, David Spence et al, REDDIE & GROSE 16, Theobalds Road, London, WC1X 8PL (GB)

(84) Designated Contracting States: DE FR GB

(54) **Fine flaw detector for PC boards.**

(57) The circuit board is scanned by a video camera (11) supplying a video processor (12) to provide a serial stream of pixel bits each representative of a picture element within a particular scan line. These serial streams of pixel bits are configured into contiguous patches of n × n picture elements and provided as inputs to logic arrays programmed to detect various types of flaws, by clocking the pixel bits into a RAM (15) with a capacity for 16 scan lines $D_0$ to $D_{15}$ of 2048 pixel bits per scan line. Each pixel bit position has an address given by a pixel clock driven address counter 16. A transceiver logic circuit 18 loads sixteen sixteen-bit registers (19a-19p) with pixel bits from the RAM (15) and also causes the stored scan lines to move successively from $D_0$ to $D_{15}$ registers in the RAM (15). When fully loaded, the registers (19a-19p) represent a 16 × 16 bit patches and their 256 outputs are decoded by programmed logic array flaw decoders 21 supplying flaw output signals to an OR-gate 22.

FINE FLAW DETECTOR FOR PC BOARDS

BACKGROUND OF THE INVENTION

A printed circuit board comprises a substrate, typically made of fiberglass or mylar whose surface has metal lines formed thereon which are electrical conductors used to connect various circuit components together and/or to external circuitry. In order to keep pace with the integrated circuit industry, feature sizes, i.e, lines and spaces between the metal lines have shrunk to very small dimensions, e.g., 0.005 inches. While techniques for the fabrication of printed circuit boards have greatly advanced in recent years, a certain percentage of printed circuit boards still come out of production with one or more of a variety of flaws. For example, a printed circuit board may have lines and/or spaces too narrow, shorts, opens, pinholes or the like; any one of which may render the board useless. Due to the extremely small sizes involved visual detection of such flaws in boards with very fine lines is neither technically effective nor economically practical. Thus, automation of the printed circuit board inspection process is an essential requirement in the fast growing world of electronic circuitry.

The present invention relates to a system for the automatic inspection of printed circuit boards and the like.

### BRIEF DESCRIPTION OF THE INVENTION

In carrying out the present invention a video camera scans the surface, e.g., the surface of a printed circuit board to be inspected for flaws such as lines and spaces too narrow, shorts, open circuits and the like in the circuit patterns formed on the surface thereof. The video camera which may be a charged coupled device array is periodically sensitized and emptied of its video contents with each such event constituting a scan line. A video processor converts each scan line of video data into a serial stream of analog levels each representative of a picture element or pixel of the surface being scanned. The output of the video processor is first quantized into binary data (1 or 0) according to the level of the analog signal with respect

- 3 -

0209252

to a preset threshold.  This data is then fed to a unique delay circuit where the data is configured into image windows of n x n bits or pixels.  Each image window changes on the occurrence of each pixel clock which may occur at a 10 $MH_z$ rate.  The image window provides $n^2$ outputs each of which is a bit representative of the black and white levels of a pixel undergoing inspection.  The dynamically changing $n^2$ outputs are provided as inputs to programmed combinational logic arrays which have been programmed in accordance with predetermined rules algorithms for each of the flaws to be detected, i.e., for each type of flaw to be detected there is an algorithm stored in the  logic array which acts as the mask, which decodes the $n^2$ outputs for combinations which indicate a flaw in the circuit board under inspection.

BRIEF DESCRIPTION OF THE DRAWINGS

Figure 1 is block diagram of the inspection system of the present invention;

Figure 2 is a more detailed showing of the delay circuit of Figure 1 shown in association with the flaw detector of Figure 1;

Figure 3 is a more detailed showing of the transceiver of Figure 2; and

Figures 4-11 are examples of masks designed to detect horizontally, vertically and diagonally oriented flawed lines.

## DESCRIPTION

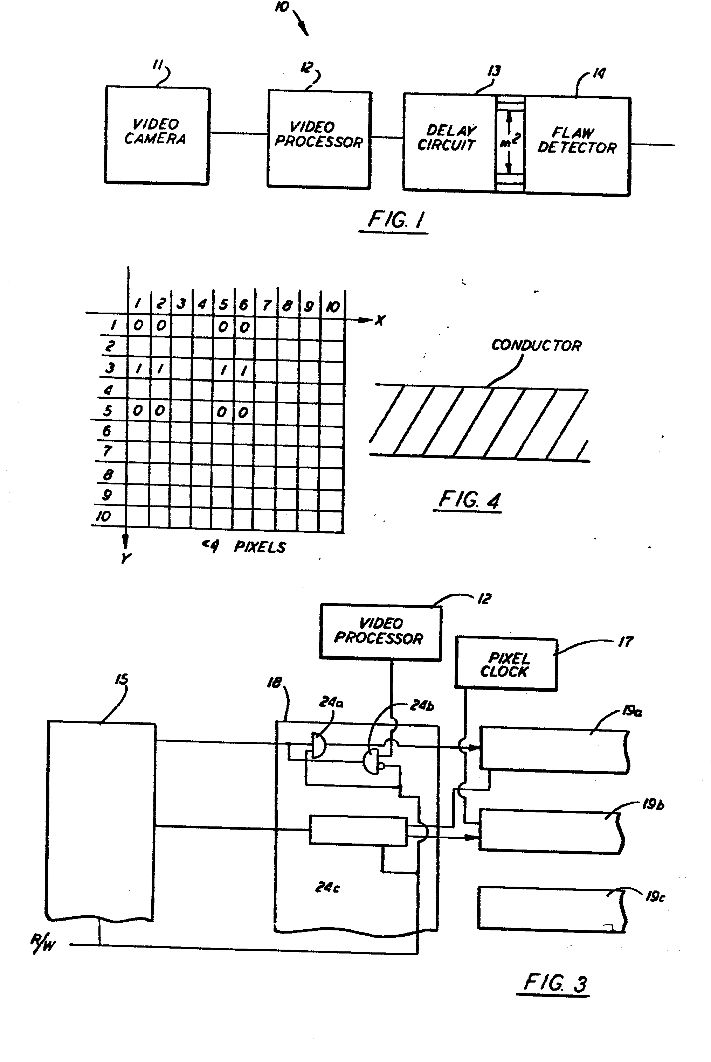

As shown in Figure 1, the printed circuit inspection system 10 of the present invention comprises a video camera 11, a video processor 12, a delay circuit 13 and a flaw detector 14. The video camera 11 which in a practical embodiment comprises a charged couple device array hereinafter referred to as a CCD array is caused to scan relative to the surface to be inspected. The number of scans necessary to view the entire inspection surface is a function of the length of the array as well as the size of the surface to be inspected. In a practical embodiment the video camera 11 or CCD array comprises 2048 light sensitive elements arranged in a straight line and is 1.024 inches in length. Under these conditions each light sensitive element in the CCD array is about 0.0005 inches by 0.0005 inches square and is capable of resolving over its length 2048 picture elements or pixels each one of which is about 0.0005 inches by 0.0005 inches square. CCD arrays could, of course, be used having a greater or smaller number of light sensitive elements in longer or shorter arrays depending on the degree of resolution required and scanning swath desired.

As is well known, a CCD array must be sensitized to view a surface along its array length and then the image information transferred out for processing. To inspect a surface, this sensitization and transfer of data must occur a

- 5 -

0209252

large number of times. For example, if one wishes to view a surface 1.024 x 1.024 inches at the highest possible resolution then a CCD array having 2048 light sensitive elements each 0.0005 inches by 0.0005 inches square would have to be sensitized at unity magnification and emptied 2048 times during the scan. Thus, in this particular example, it takes 2048 scan lines to view the entire surface. For each scan line the CCD array outputs an analog signal representative of 2048 pixels. If the surface to be inspected exceeds 1.024 inches in width, more than one scan may be required.

The output of video camera 11 is connected to video processor 12. The video processor 12 functions as an A to D converter to transform the analog signal representative of the pixels in each scan line to a digital signal comprising 0's and 1's each representative of a pixel viewed by the CCD array in each scan line.

The video processor 12 is connected to delay circuit 13. The delay circuit 13 functions as a serial to parallel converter and provides an n x n pixel image window output in real time. The image window of n x n pixels comprises $n^2$ bits each representative of a reflecting or non-reflecting area of the inspection surface being scanned by the CCD array. The image window generated in delay circuit 13 is updated by "n" new pixels or bits every pixel clock which in a practical embodiment occur at a 10 $MH_z$ rate. As will be explained more fully hereinbelow these image windows are generated in such a way that image windows of the entire inspection surface are provided.

The delay circuit 13 provides a matrix of $n^2$ outputs which are provided as inputs to flaw detector 14. The flaw detector 14 comprises a programmable logic array which acts as the defect mask programmed for each type of defect desired to be detected. The $n^2$ outputs from delay line 13 are decoded by the programmable logic arrays at the 10 MH$_z$ previously mentioned. When a flaw is detected, flaw detector 14 provides an output.

Referring now to Figure 2 the delay circuit 13 comprises a random access memory or RAM 15. The RAM 15 is 2048 x 16, i.e., it is capable of storing 16 bit words at each of 2048 addresses.

Connected to RAM 15 is an address counter 16. The address counter 16 has an input from pixel clock 17 and on occurrence of each pixel clock addresses each one in succession of the 2048 memory positions of the RAM 15. The address counter 16 is reset at the start of each scan line by an input R which may be provided in any convenient manner, e.g., by the signal which sensitizes or unloads the CCD array.

A transceiver 18 interconnects RAM 15 and shift registers 19. The shift registers comprise sixteen shift registers 19a through 19p. Each shift register 19a through 19p is a sixteen bit shift register with each bit position having an output. The shift registers 19a through 19p, therefore, provide 16 x 16 or 256 outputs. These outputs are connected to programmable logic array 21 which is connected to OR circuit 22.

Each of the shift registers 19a through 19p has a clock input from pixel clock 17 and a data input via transceiver 18 from the registers designated D0 through $D_{15}$ of RAM 15, i.e., $D_0$ is connected to shift register 19a, $D_1$ is connected to shift register 19 transceiver, $D_2$ is connected to shift register 19c etc.

The first bit position of each of the shift registers 19a through 19p is connected via transceiver 18 to the next lower register of RAM 15, i.e., the first bit position of shift register 19a is connected to $D_1$, the first bit position of shift register 19b is connected to $D_2$, the first bit position of shift register 19c is connected to $D_3$ etc.

The manner of the foregoing described connections will become more apparent with the description of transceiver 18 in connection with Figure 3.

Video processor 12 is connected to RAM 15 via transceiver 18 and provides a new bit of video data to the $D_0$ bit position of the particular one of the 2048 sixteen bit words under address in RAM 15.

Sixteen scan lines are required to load RAM 15. On each pixel clock a video data bit from video processor 12 is written into the addressed one of the 2048 bit positions of the $D_0$ register of RAM 15 until all 2048 bit positions are filled. In other words, all image data provided by camera 11 for the first scan line is transferred into the $D_0$ bit positions. This same process occurs for each of the scan lines. However, as the $D_0$ bit positions are being loaded with new data, the data from the first scan line is being transferred into the 2048 $D_1$ bit positions on a bit by bit basis at the pixel clock rate. Thus, after address counter 16 has cycled through all 2048 addresses twice, the $D_0$ bit positions have been refilled with video data representative of the pixels of the second scan line while the video data representative of the first scan line are stored in the $D_1$ bit positions. This continues for sixteen cycles of the address counter 16 until the RAM 15 is filled. At this point the video data of the sixteenth scan line is in the $D_0$ bit positions and the video data of the first scan line is in the $D_{15}$ bit positions and the intervening $D_1$ through $D_{14}$ bit positions store the video data for the fifteenth through second scan lines, respectively. At this point, RAM 15 has stored 2048 words of 16 bits each. The first 16 bit word at address 1 contains the video data of the first pixel of each of the first 16 scan lines, the second 16 bit word at address 2 contains the video data of the second pixel of each of the first 16 scan lines and so on up through the 2048th 16 bit word at address 2048.

After RAM 15 is loaded the occurrence of each pixel clock causes the sixteen bit word that is being addressed by the address counter 16 to be read into the sixteen shift registers 19a through 19p. Shift registers 19a through 19p are filled synchronously and after sixteen pixel clocks, shift registers 19a through 19b contain 16 x 16 bits of video data representative of the first sixteen pixels of each of the first sixteen scan lines. This provides an image window of 16 x 16 pixels. The 256 outputs, i.e., sixteen from each of the sixteen shift registers 19a through 19p are provided as inputs to programmable logic array 21 (or defect mask). On the seventeenth pixel clock the next word is read into shift registers 19a through 19p dumping the first word from the last bit positions, i.e., the rightmost bit position of the shift registers.

It can be seen that after 2048 pixel clocks all bits representative of the pixels in the first sixteen scan lines have passed through the shift registers 19a through 19p (a 16 bit word at a time) at the pixel clock rate. Thus, programmable logic array 21 has decoded 2033 complete image windows in the time of 2048 pixel clocks. Note the first 16 pixels are required to generate the first complete window after which the remaining 2032 full image windows are generated. Thereafter, each new pixel defines a new image window.

In the meantime, video data from the seventeenth scan line has been loaded into the 2048 $D_0$ bit positions of RAM 15 causing, as indicated before, the video data of the sixteenth scan line to drop down to the $D_1$ bit positions, the video data of the fifteenth scan line to drop down to the $D_2$ bit positions and so on with the video data from the first scan line dropping out of the RAM 15. This happens at the pixel clock rate as will be explained more fully in connection with Figure 3.

With the loading of the eighteenth scan line into the $D_0$ positions of the RAM 15, the first 16 bit word read into shift register 19a through 19p on the first pixel clock consists of the first bit of the seventeenth scan line into shift register 19a, the first bit of the sixteenth scan line into shift register 19b, the first bit of the fifteenth scan line into shift register 19c etc. Thus, the 16 x 16 bit image window in shift registers 19a through 19p has, after one pixel clock, changed by one new bit representative of the first pixel of the seventeenth scan line in the first bit position of shift register 19a. However, now the first bit of the sixteenth scan line is in the first bit position of shift register 19b, the first bit of the fifteenth scan line is in the first bit position of shift register 19c etc. Thus, the 16 bit word read into the shift registers 19a through 19p has one new bit in the $D_0$ position with the old bits of the word shifted down one. This occurs for each pixel clock with the word shifted in shift registers 19a through 19p being controlled by address counter 16.

The same process occurs as each new scan line is loaded into the $D_0$ bit positions of RAM 15 until the test surface is completely scanned. Each 16 x 16 bit image window being decoded by programmable logic array 21 (defect mask) changes with each pixel clock and line clock. Thus it changes by one pixel in the X-direction for each new scan line and by 16-pixels in the Y-direction for each new pixel clock. The 16-pixels in the Y-direction are transferred in parallel into the sixteen shift registers 19a thru 19p from the RAM 15.

The manner in which data is transmitted back and forth through transceiver 18 is shown in Figure 3. The transceiver 18 comprises sixteen each of tristate circuits 24a and 24b. On the occurrence of a pixel clock the 16 bit pixel word in the addressed bit positions of the sixteen RAM registers is transferred through 16 enabled tristate circuits like 24 into shift registers 19a through 19p by a read pulse applied to RAM 15 and the input of each of 16 circuits like 24. Then a write pulse is applied to circuit 24b and the new data bit from video processor 12 is written into the $D_0$ position of the 16 bit word under address in RAM 15. At the same time the bits in the first bit positions of the shift registers 19a through 19p are written into the next bit positions of the particular 16 bit word under address, i.e., old $D_0$ goes into $D_1$, old $D_1$ goes into $D_2$ and so on. In Figure 3, blocks which represent circuits similar to circuits 24a and 24 b are shown connected to the first shift register for receiving and transmitting old $D_0$ to $D_1$. While not shown, each of the sixteen shift registers and $D_0$ to $D_{15}$ bit positions have a similar set of circuits 24a and 24b disposed in transceiver 18 for accomplishing the foregoing described transfers between the RAM 15 and the sixteen shift registers 19a through 19p. The read/write pulses are essentially the pixel clock pulses.

To explain further, on the leading edge of the first pixel clock the address counter 16 is indexed by one and the 16 bit word stored in the first bit position of each of the sixteen 2048 bit registers of RAM 15 is shifted into the first bit position of the sixteen shift registers 19a through 19p. Before the address changes the first bit of the scan line from video processor 12 is written into the first bit position $D_0$ of the RAM 15. At the same time the bit that was in bit position $D_0$ is written into bit position $D_1$ via the first shift register and the bit in bit position $D_1$ is written into bit position $D_2$ via the second shift register etc. down to bit position $D_{15}$, i.e., $D_{14}$ to $D_{15}$ with the bit originally in bit position $D_{15}$ being dumped. This occurs for the entire scan line of the 2048 pixels with each successive pixel clock indexing the address counter 16 by one so that the next bit position in each of the sixteen 2048 bit registers is addressed. Therefore, on the first pixel clock of the first scan line the 16 bit word in address position 1 in $D_0$ through $D_{15}$ has changed by one bit lift line with the rest of the bits being shifted down one. On the second pixel clock of the first scan line the same events occur except that it is the 16 bit word in the next bit positions or address position of each of the sixteen registers that is shifted into shift registers 19a through 19p and this new word is changed by one bit with the rest of the bits shifted down by one. On the third to two thousand forty eighth pixel clocks of the first scan line the same events occur. On each next scan the process is repeated. If the RAM 15 is originally empty it takes 16 scan lines of one bit pixel data before RAM 15 is filled. It then takes sixteen pixel clocks for the shift registers to be filled. Thereafter, at each pixel clock, the 256 bits at the outputs of the sixteen shift registers 19a through 19p change as previously described.

As previously pointed out flaws on the surface under test are detected by inspecting n x n - pixel image window areas of the test surface under inspection. The n x n pixel areas are generated as previously explained in a dynamic fashion as the test surface is scanned by the video camera, i.e., CCD array 11. The 256 continuously changing outputs from the shift registers 19a through 19p are provided to programmable logic array 21 which has been preprogrammed according to predetermined rules algorithms to decode each image window. The image window changes by 16 new pixels at the pixel clock rate which in a practical embodiment is 10MH$_z$. The 16-pixels in the Y-direction are transferred in parallel into the sixteen shift registers 19a thru 19p from the RAM 15. The image window then changes by one-pixel (a scan line) in the X-direction at the start of each new scan line. The number of different types of flaws being looked for may vary in number depending on the particular application. In any event when programmable logic array 21 decodes a flaw, an output is provided to OR gate 22 which provides a signal to activate an alarm, e.g., a system interrupt, or a signal to record the event.

In the inspection of printed circuit boards the conductor lines may be too narrow or the spaces between conductor lines may be too narrow. This may be true for lines or spaces which are horizontal, vertical, diagonal or as a matter of fact any orientation. Programs can be designed for any type of flaw desired to be detected.

Figure 4 is an example of a 10 x 10 pixel defect mask designed to detect flawed lines or spaces for horizontal orientations. In this example the mask could just as easily be 16 x 16 pixel but 10 x 10 pixels has been chosen for easy presentation.

In the example shown in Figure 4, the rejection criteria for a horizontal line or space is for line widths or spaces less than four pixels. Other values could be used by appropriately programming the programmable logic array 21 which performs the defect mask function. The Boolean expression, i.e., combinations of $P_{y,x}$ needed to satisfy conditions for a horizontal line narrower than 4 pixels is:

$$(\overline{P_{1,1} \cdot P_{3,1} \cdot \overline{P_{5,1}}}) \cdot (\overline{P_{1,2} \cdot P_{3,2} \cdot \overline{P_{5,2}}}) \cdot (\overline{P_{1,5} \cdot P_{3,5} \cdot \overline{P_{5,5}}}) \cdot (\overline{P_{1,6} \cdot P_{3,6} \cdot \overline{P_{5,6}}})$$

= "1" = Flaw.

The Boolean expression for horizontal spaces between conductors too narrow ( 4 pixels) is:

$$(P_{1,1} \cdot \overline{P_{3,1}} \cdot P_{5,1}) \cdot (P_{1,2} \cdot \overline{P_{3,2}} \cdot P_{5,2}) \cdot (\overline{P_{1,5}} \cdot P_{3,5} \cdot P_{5,5}) \cdot (P_{1,6} \cdot \overline{P_{3,6}} \cdot P_{5,6})$$

= "1" = Flaw. This is the result of complementing the inputs in the above expression.

In the present example each square of the grid represents a pixel of 0.0005" by 0.0005". Relating algorithm (1) to the defect mask of Figure 4 shows that the algorithm is satisfied, i.e., a flaw exists when the expression equals 1. In this example the horizontal conductor is too narrow, i.e., less than four pixels in width. In this case 0's represent the substrate and "1" represent the conductor. The squares of the grid which are unmarked are "don't care" values and therefore do not affect the mask expression.

Algorithm (2) is satisfied for a flaw, i.e., spaces between horizontal conductors are too narrow by replacing the 0's with 1's and the 1's with 0's in the defect mask of Figure 4.

If the algorithms (1) and (2) are not satisfied, then no flaw exists for the particular portion or defect mask of the surface being inspected.

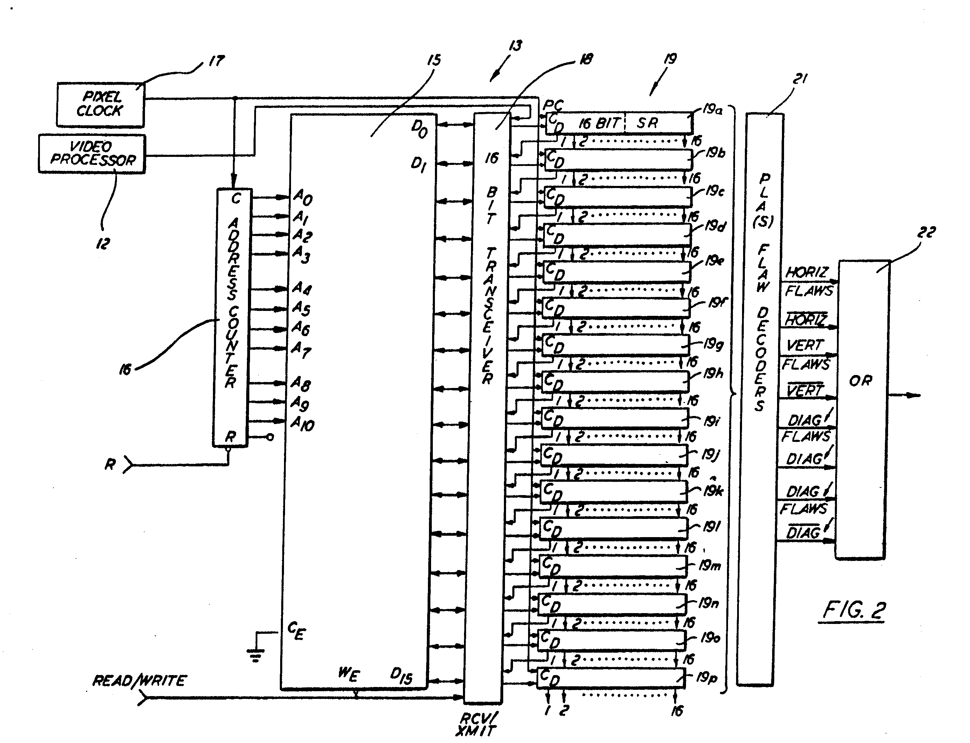

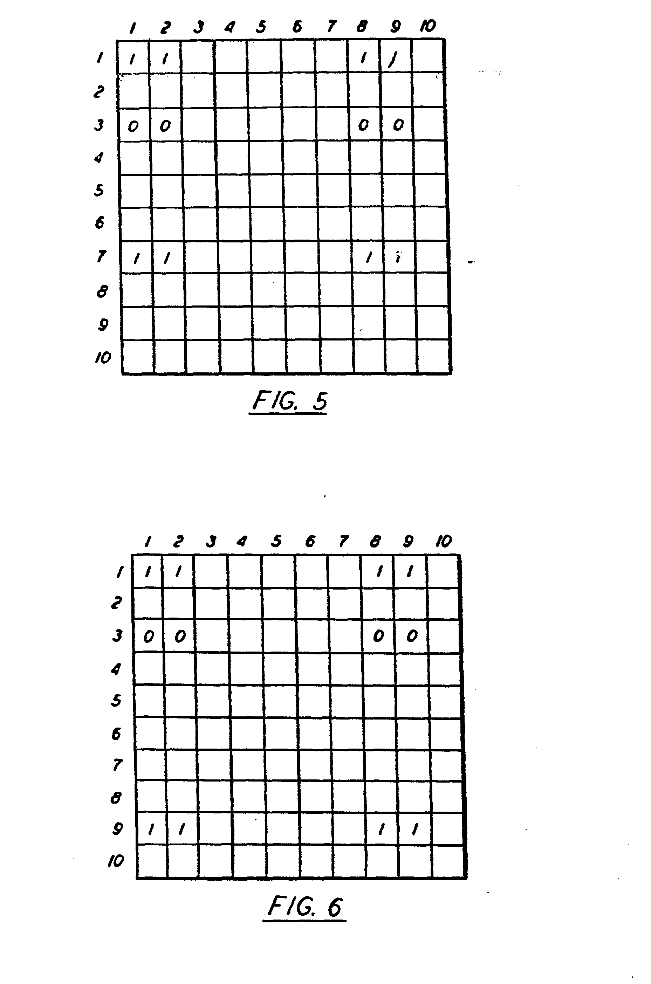

Other rejection values for a horizontal line or space too narrow can be achieved by utilizing different bit positions in the defect mask. For example, Figure 5 will detect horizontal spaces less than 6 pixels and figure 6 will detect horizontal spaces less than 8 pixels. complementing the bits in the defect mask will enable detection of horizontal lines too narrow as previously stated.

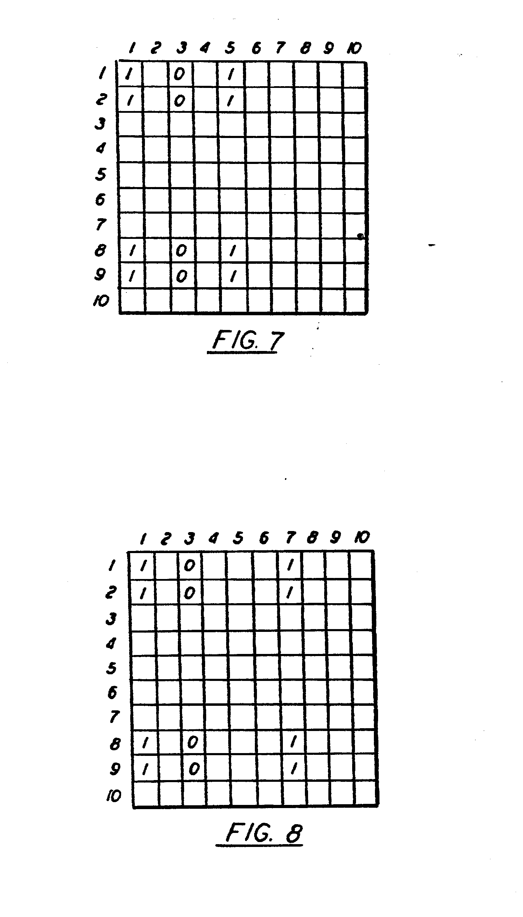

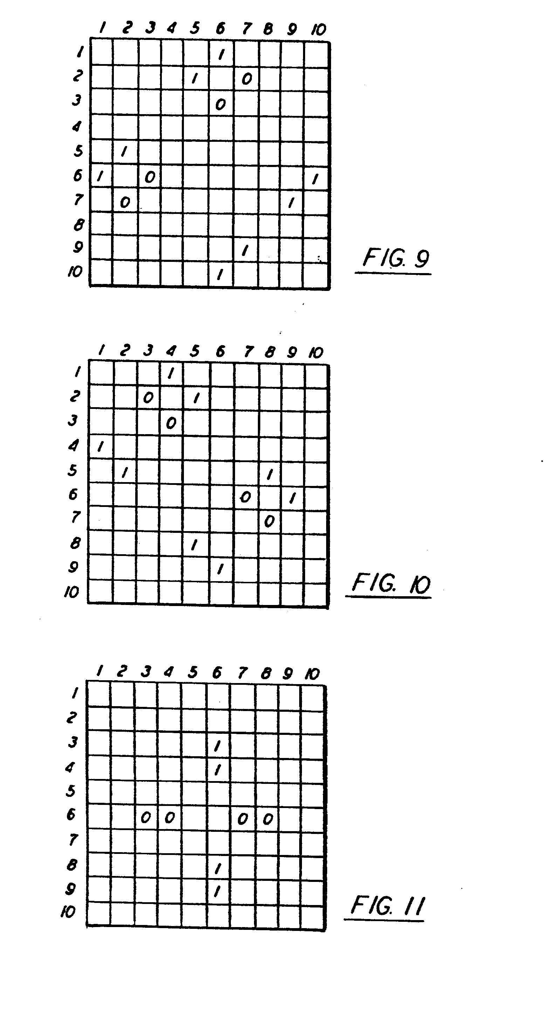

Vertical lines and spaces too narrow can be detected by rotating the bit positions in the defect mask 90°. This is demonstrated in Figures 7 and 8 which will detect vertical spaces less than 4 pixels and 6 pixels, respectively. Vertical lines too narrow at these values will be detected by complementing the bits.

A configuration for detecting a diagonal space which is less than 8 bits wide is shown in Figure 9. Once again, complementing the bits will detect diagonal lines less than 8 bits, changing the bit positions will enable detection of different values of rejection criteria and rotation of the bit pattern will enable detection of defects in lines orientated diagonally opposite to the configuration shown. See, for example, Figure 10 which is for diagonal spaces less than 4 pixels.

Incipient opens and shorts can be detected using a bit pattern as shown in Figure 11 for an incipient open (in a vertical feature) or incipient short (between horizontal features) less than 4 pixels. Once again, complementing the bits and changing the bit positions results in detection of any horizontal or vertical incipient (or full) open or short at various rejection criteria values.

Other algorithms may be formulated for almost any kind of flaw in addition to those described above. For example, algorithms have been formulated for vertical and diagonal lines or spaces too narrow , various vertical, horizontal and diagonal incipient shorts or opens, isolated defects and many others.

In accordance with well known programming techniques a programmable logic array such as programmable logic array 21 may have any number of such algorithms hardwired therein and may function as a defect mask in accordance with the present invention to decode the image windows generated by the apparatus of Figure 2 to decode each image window generated for any desired flaw.

Other modifications of the present invention are possible in light of the above description which should not be construed as placing limitations thereon beyond those expressly set fort in the claims which follow:

## CLAIMS

1.  In a system for processing image data on a surface:

    video scanning means for scanning the surface across its length and width through a plurality of arbitrarily selected scan lines each one of which comprises a plurality of pixels;

    said video scanning means providing as an output a serial stream of bits each representative of one of said pixels in each of said scan lines;

    generating means connected to said video scanning means providing $n^2$ real time outputs of dynamically changing n x n pixel masks of the areas being viewed by said video scanning means;

    decoder means connected to said generating means programmed to detect one or more flaw types in the areas being viewed by said video scanning means by decoding each of the masks provided by said generating means during the scan of the surface.

2. In a system according to Claim 1 wherein said generating means comprises:

n shift registers with each of said shift registers having n bit storage positions;

each of said n bit storage positions having output means such that said n shift registers provide $n^2$ outputs;

formatting means connected between said video scanning means and said n shift registers providing bits representative of said pixels to said shift registers in a manner that the $n^2$ outputs from said shift registers represent real time n x n pixel masks of the areas being scanned by said video scanning means.

3. In a system according to Claim 2 wherein said formatting means comprises:

random access memory means comprising n registers, each of said n registers including a bit storage position for each of the bits representative of a pixel in a scan line;

respective bit storage positions in said n registers being an addressable memory position capable of storing a word of n bits;

address counter means for addressing in sequence the memory positions in said n registers at a predetermined pixel clock rate;

transceiver means for reading the bits of the n bit word in an addressed n bit memory position into the respective first bit positions of said n shift registers at said pixel clock rate.

- 19 -

0209252

4. In a system according to Claim 3 wherein said transceiver means further includes,

means for writing the bit in the first bit position of each of said shift registers into the next lower bit position of the bit positions of the addressed word in said random access memory at said pixel clock rate.

5. In a system according to Claim 4 wherein said transceiver means further includes:

means connected between said video processor means and said random access memory for writing each new data bit from said video processor means into the addressed bit position of the first of said n registers at said pixel click rate.

6. In a system according to Claim 5 further comprising:

means connected to said address counter means for resetting said address counter means for each scan line.

7. In a system according to Claim 6 wherein said decoder means comprises;

programmable logic array means connected to said $n^2$ outputs of said n shift registers programmed to decode at said pixel clock rate each n x n pixel mask for a plurality of flaws and providing an output for each flaw detected.

8. In a system according to Claim 7 wherein said video scanning means comprises;

at least one charge coupled array device comprising a plurality of light sensitive elements each of which provides in a serial stream an analog signal representative of the light reflectance of the surface viewed.

9. In a system according to Claim 8 wherein said video processor means comprises:

analog to digital converter means connected to said charged coupled array device providing a digital output of bits each of which represents a pixel area of the surface viewed.

10. In a system according to Claim 9 wherein said transceiver means comprises:

first transmitter (part of transceiver) circuit means connected between respective ones of said n shift registers and said n registers for transferring the addressed word into the first bit positions of said n shift registers;

second receiver circuit (part of transceiver) means connected between the first bit positions of said shift registers and the 2nd through $n^{th}$ bit positions of said n registers for transferring the bits to the $2^{nd}$ through $n^{th}$ of the addressed word of the bit positions of the addressed word.

0209252

1/5

FIG. 1

FIG. 4

CONDUCTOR

<9 PIXELS

FIG. 3

FIG. 2

|    | 1 | 2 | 3 | 4 | 5 | 6 | 7 | 8 | 9 | 10 |
|----|---|---|---|---|---|---|---|---|---|----|
| 1  | 1 | 1 |   |   |   |   |   | 1 | 1 |    |
| 2  |   |   |   |   |   |   |   |   |   |    |
| 3  | 0 | 0 |   |   |   |   |   | 0 | 0 |    |
| 4  |   |   |   |   |   |   |   |   |   |    |
| 5  |   |   |   |   |   |   |   |   |   |    |
| 6  |   |   |   |   |   |   |   |   |   |    |
| 7  | 1 | 1 |   |   |   |   |   | 1 | 1 |    |
| 8  |   |   |   |   |   |   |   |   |   |    |
| 9  |   |   |   |   |   |   |   |   |   |    |
| 10 |   |   |   |   |   |   |   |   |   |    |

*FIG. 5*

|    | 1 | 2 | 3 | 4 | 5 | 6 | 7 | 8 | 9 | 10 |
|----|---|---|---|---|---|---|---|---|---|----|
| 1  | 1 | 1 |   |   |   |   |   | 1 | 1 |    |
| 2  |   |   |   |   |   |   |   |   |   |    |
| 3  | 0 | 0 |   |   |   |   |   | 0 | 0 |    |
| 4  |   |   |   |   |   |   |   |   |   |    |
| 5  |   |   |   |   |   |   |   |   |   |    |
| 6  |   |   |   |   |   |   |   |   |   |    |
| 7  |   |   |   |   |   |   |   |   |   |    |
| 8  |   |   |   |   |   |   |   |   |   |    |
| 9  | 1 | 1 |   |   |   |   |   | 1 | 1 |    |
| 10 |   |   |   |   |   |   |   |   |   |    |

*FIG. 6*

FIG. 7

FIG. 8

_FIG. 9_

_FIG. 10_

_FIG. 11_